Europäisches Patentamt

European Patent Office

Office européen des brevets

(19)

(11) Veröffentlichungsnummer : **0 267 205**
**B1**

(12) EUROPÄISCHE PATENTSCHRIFT

(45) Veröffentlichungstag der Patentschrift :
20.09.89

(51) Int. Cl.⁴ : **C 03 B 23/04**

(21) Anmeldenummer : **87902400.8**

(22) Anmeldetag : **15.04.87**

(86) Internationale Anmeldenummer :
**PCT/DE 87/00176**

(87) Internationale Veröffentlichungsnummer :
**WO/8706222 (22.10.87 Gazette 87/23)**

(54) HALTEFUTTER FÜR GLASBEARBEITUNGSMASCHINEN.

(30) Priorität : **17.04.86 DE 3613210**

(43) Veröffentlichungstag der Anmeldung :
**18.05.88 Patentblatt 88/20**

(45) Bekanntmachung des Hinweises auf die Patenterteilung : **20.09.89 Patentblatt 89/38**

(84) Benannte Vertragsstaaten :
**AT BE CH FR GB IT LI NL**

(56) Entgegenhaltungen :
**DE--C-- 676 625**
**DE--C-- 736 482**
**FR--A-- 916 954**
**FR--A-- 2 170 134**
**Patent Abstracts of Japan, vol.9, Nr.287 (C-314)(2010),
14 November 1985**

(73) Patentinhaber : **Dichter, Hans-Joachim**
**Sachsendamm 93**
**D-1000 Berlin 62 (DE)**

(72) Erfinder : **Dichter, Hans-Joachim**
**Sachsendamm 93**
**D-1000 Berlin 62 (DE)**

(74) Vertreter : **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

## Beschreibung

Die Erfindung betrifft ein Haltefutter für mit Rohren beschickbare Glasbearbeitungsmaschinen zur Herstellung von Fläschchen, Ampullen od. dgl. mit mehreren in einem Grundkörper geführten, durch einen auf einen Druckring einwirkenden Betätigungshebel hin- und herverschiebbaren Klemmbacken, die an ihren den Klemmflächen abgewandten Enden Mitnehmer aufweisen, die in Kulissen des Druckringes geführt sind.

Aus der DE-PS 676 625 sind Haltefutter der in Betracht gezogenen Art bekannt, bei denen die Kulissen der Druckringe von umlaufenden Nuten gebildet werden, in die an den Enden der Klemmbacken angeordnete Vorsprünge greifen, die entweder von Teilen der Klemmbacken selbst oder von an den Klemmbackenenden befestigten Querbolzen gebildet werden. Die bekannten Lösungen vermögen insofern nicht voll zu befriedigen, als sowohl der zur Herstellung der Futter als auch der zur Justierung ihrer Klemmbacken erforderliche Aufwand vergleichsweise groß ist und Möglichkeiten zum Spielausgleich der Klemmbackenführungen nach längerem Einsatz bei ihnen fehlen.

Der Erfindung liegt die Aufgabe zugrunde, ein Haltefutter der in Betracht gezogenen Art zu schaffen, dessen Klemmbacken bzw. Klemmbackenführungen sich auf einfache Weise mit großer Genauigkeit herstellen und justieren lassen. Diese Aufgabe wird erfindungsgemäß dadurch gelöst, daß die Mitnehmer für die Klemmbacken von Kugeln gebildet werden, die einerseits in ihrem Durchmesser angepaßten zylindrischen Bohrungen des Druckringes geführt und andererseits in senkrecht zur Achse dieser Bohrungen verlaufenden Bohrungen gleichen Durchmessers an den gegenüber dem Kugeldurchmesser schmaleren Enden der Klemmbacken gehalten werden.

Ein bevorzugtes Ausführungsbeispiel eines sich durch Einfachheit und gute Führungseigenschaften auszeichnenden Haltefutters wird im folgenden anhand der beigefügten Zeichnung näher erläutert. Es zeigen:

Fig. 1 teilweise im Schnitt die Seitenansicht eines Haltefutters,

Fig. 2 die Stirnansicht des Haltefutters gemäß Fig. 1 und

Fig. 3 eine Draufsicht auf drei Haltefutter einer mit einer Vielzahl von Haltefuttern bestückten Glasbearbeitungsmaschine.

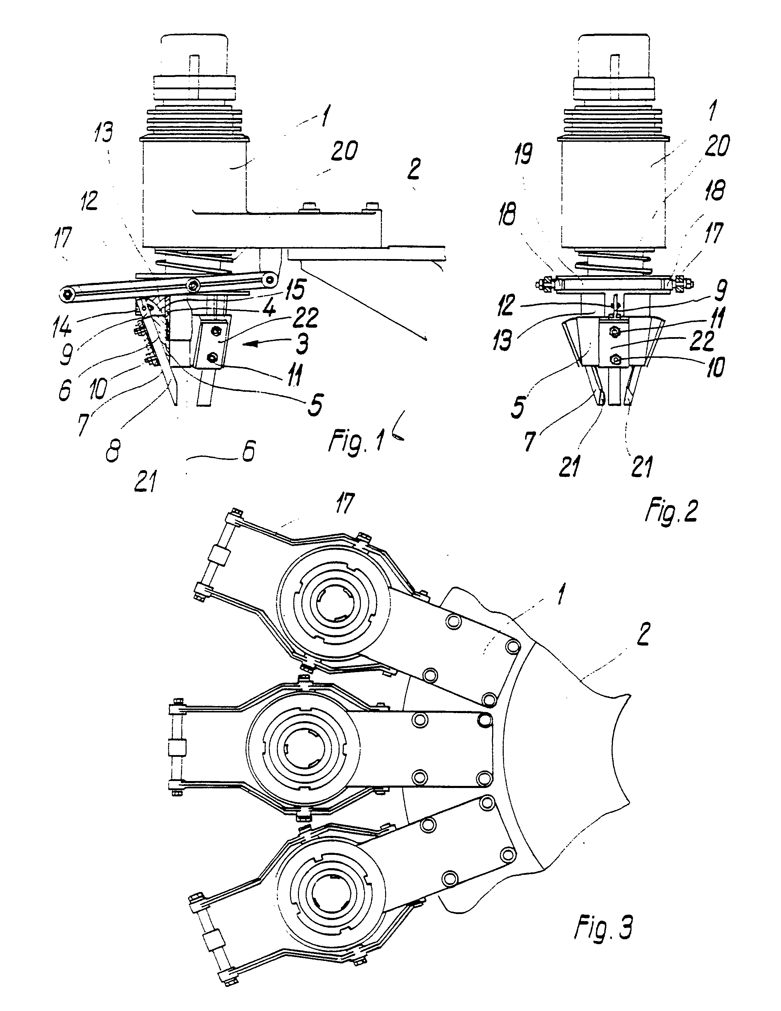

In den Figuren ist 1 ein an einem umlaufenden Gestell 2 einer Glasbearbeitungsmaschine befestigter Ausleger, der ein allgemein mit 3 bezeichnetes Haltefutter für ein Glasrohr oder ein Rohr aus einem anderen thermoplastisch verformbaren Material trägt. Zum Haltefutter gehört ein mit einem Rohr 4 verschraubter Grundkörper 5, der mit Führungen 6 für drei Klemmbacken 7 versehen ist. Die Klemmbacken 7 haben einen Führungsteil 8 mit einem im wesentlichen dreieckförmigen Querschnitt und eine Lasche 9 mit einem rechteckigen Querschnitt. Die Führungsteile 8 der Klemmbacken 7 sind spielfrei in ihren Führungen gelagert. Zur Aufrechterhaltung der Spielfreiheit dienen Gewindestifte 10, deren Lage durch Kontermuttern 11 gesichert ist. Die Laschen 9 sind mit Querbohrungen versehen, die einen Käfig für eine Kugel 12 bilden. Die Laschen 9 und die Kugeln 12 sind in einem zum Betätigen der Klemmbacken dienenden Druckring 13 geführt. Dieser Druckring 13 ist einerseits mit Bohrungen 14 für die Kugeln 12 und andererseits mit Schlitzen 15 für die Laschen 9 versehen. Zur Einleitung einer Auf- und Abbewegung in Richtung der Längsachse 16 des Haltefutters in den Druckring 13 dient ein Betätigungshebel 17. Der Betätigungshebel 17 trägt zwei drehbar gelagerte Bolzen 18, die in eine Ringnut 19 des Druckringes 13 greifen. Eine Feder 20 drückt den Druckring 13 in die in den Figuren 1 und 2 dargestellte Lage.

Beim Betrieb der Maschine rotieren das Rohr 4, der Druckring 13 und der mit den Klemmbacken 7 bestückte Grundkörper 5. Die Feder 20 drückt die Spannflächen 21 der Klemmbacken gegen ein eingespanntes, in der Zeichnung nicht dargestelltes Rohr. Ein Verdrehen der Klemmbacken 7 ist aufgrund ihrer im wesentlichen dreieckigen Form nicht möglich. Wird der Betätigungshebel 17 gegen die Kraft der Feder 20 in den Figuren 1 und 2 nach oben bewegt, so nimmt er über die Bolzen 18 und die Ringnut 19 den Druckring 13 mit. Dieser verändert mithin auf dem Rohr 4 seine Axiallage gegenüber dem Grundkörper 5. Dabei werden die Klemmbacken 7 in ihren Führungen 6 schräg nach oben bewegt und die Spannflächen 21 geben das jeweilige Rohr frei.

Die Verwendung handelsüblicher Kugeln 12 zur Führung der Laschen 9 der Klemmbacken in den Bohrungen 14 gestattet es, mit einfachen Mitteln eine sehr genaue spielfreie Führung zu realisieren. Auch die Herstellung der Führungen 6 für die Führungsteile 8 der Klemmbacken 7 ist einfach. Die Führungen 6 werden in den Grundkörper 5 eingefräst und durch einen die Gewindestifte 10 aufnehmenden Deckel 22 abgedeckt.

## Patentansprüche

1. Haltefutter (3) für mit Rohren (4) beschickbare Glasbearbeitungsmaschinen zur Herstellung von Fläschchen, Ampullen od. dgl. mit mehreren in einem Grundkörper (5) geführten, durch einen auf einen Druckring (13) einwirkenden Betätigungshebel (17) hin- und herverschiebbaren Klemmbacken (7), die an ihren den Klemmflächen abgewandten Enden Mitnehmer aufweisen, die in Kulissen des Druckringes (13) geführt sind, dadurch gekennzeichnet, daß die Mitnehmer für die Klemmbacken (7) von Kugeln (12) gebildet werden, die einerseits in ihrem Durchmesser angepaßten zylindrischen Bohrungen (14) des Druckringes (13) geführt und andererseits in senkrecht zur Achse dieser Bohrungen (14) verlaufenden Bohrungen gleichen Durchmessers an den gegenüber dem Kugeldurchmesser schmaleren Enden der Klemmbacken (7) gehalten werden.

2. Haltefutter nach Anspruch 1, dadurch gekennzeichnet, daß die die Kugeln (12) haltenden Enden der Klemmbacken (7) von Laschen (9) gebildet werden, die in Schlitzen (15) des Druckringes (13) geführt sind.

3. Haltefutter nach Anspruch 2, dadurch gekennzeichnet, daß sich an die Laschen (9) der Klemmbacken (7) ein Führungsteil (8) mit einem im wesentlichen dreieckigen Querschnitt anschließt, dessen Scheitel zur Längsachse (16) des Haltefutters (3) gerichtet ist.

4. Haltefutter nach Anspruch 3, dadurch gekennzeichnet, daß die Führungsteile (8) der Klemmbacken (7) in Führungen (6) des Grundkörpers (5) geführt sind, die mit zum Spielausgleich dienenden, gegen den Rücken der Führungsteile (8) drückenden Gewindestiften (10) versehen sind.

## Claims

1. A securing clamp (3) for glass-working machines adapted to be supplied with tubes (4) for manufacturing flasks, ampoules or the like, comprising a number of clamping jaws (7) guided in a base member (5) and movable in reciprocation by an actuating lever (17) acting on a pressure ring (13), the ends of the jaws remote from the clamping surfaces being provided with cams guided in slotted links of the pressure ring (13), characterised in that the cams for the clamping jaws (7) are balls (12) which on the one hand are guided in suitable-diameter cylindrical bores (14) in the pressure ring (13) and on the other hand are held in bores of equal diameter extending perpendicular to the axis of the firstmentioned bores (14) at the ends of the clamping jaws (7) which are narrower than the ball diameter.

2. A securing clamp according to claim 1, characterised in that the ends of the clamping jaws (7) holding the balls (12) are cover plates (9) guided in slots (15) in the pressure ring (13).

3. A retaining clamp according to claim 2, characterised in that a guide part (8) adjacent the cover plates (9) of the clamping jaws (7) has a substantially triangular crosssection, the apex of which extends towards the longitudinal axis (16) of the securing clamp (3).

4. A securing clamp according to claim 3, characterised in that the guide parts (8) of the clamping jaws (7) are guided in guides (6) in the base member (5) and comprising threaded pins (10) which compensate the clearance and press the backs of the guide parts (8).

## Revendications

1. Mandrin de serrage (3) pour machines de travail du verre, pouvant être chargées de tubes (4), pour la fabrication de bouteilles, d'ampoules, etc. comportant plusieurs mâchoires de serrage (7) guidées dans un corps de base (5), coulissant dans un mouvement de va-et-vient sous l'action d'un levier de manoeuvre (17) agissant sur un anneau de serrage (13), et qui comportent, à leurs extrémités éloignées des faces de serrage, des entraîneurs qui sont guidés dans des coulisses de l'anneau de serrage (13), caractérisé en ce que les entraîneurs des mâchoires de serrage (7) sont formés par des billes (12) qui d'une part sont guidées dans des perçages (14) cylindriques adaptés à leur diamètre, pratiqués dans l'anneau de serrage (13), et d'autre part sont maintenues dans des perçages de même diamètre, perpendiculaires à l'axe des perçages (14), pratiqués aux extrémités des mâchoires de serrage (7), plus étroites que le diamètre des billes.

2. Mandrin de serrage selon la revendication 1, caractérisé en ce que les extrémités des mâchoires de serrage (7), maintenant les billes (12), sont formées par des pattes (9) qui sont guidées dans des fentes (15) de l'anneau de serrage (13).

3. Mandrin de serrage selon la revendication 2, caractérisé en ce qu'un élément de guidage (8) de section transversale à peu près triangulaire, et dont le sommet est dirigé vers l'axe longitudinal (16) du mandrin de serrage (3), se raccorde aux pattes (9) des mâchoires de serrage (7).

4. Mandrin de serrage selon la revendication 3, caractérisé en ce que les éléments de guidage (8) des mâchoires de serrage (7) sont guidés dans des organes de guidage (6) du corps de base (5), lesquels sont pourvus de tiges filetées (10) pressant la partie arrière des éléments de guidage (8), et servant à compenser le jeu.

EP 0 267 205 B1

Fig. 1

Fig. 2

Fig. 3